# FASCICULE DE BREVET EUROPEEN

(11) **EP 1 570 304 B1**
(45) Date de publication et mention de la délivrance du brevet: **13.02.2008**
(21) Numéro de dépôt: 03796133.1
(22) Date de dépôt: 02.12.2003
(51) Int. Cl.: G02B 5/30, G02B 27/28

(54) **SEPARATEUR DE POLARISATION, PROCEDE POUR SA FABRICATION ET LENTILLE OPHTALMIQUE PRESENTANT DES INSERTS DE PROJECTION LE CONTENANT**
POLARISATIONSTEILER, HERSTELLUNGSMETHODE DAFÜR UND OPHTALMISCHE LINSE MIT DIESEM TEIL ALS PROJEKTIONSEINSATZ
POLARIZATION SEPARATOR, METHOD FOR MAKING SAME AND OPHTHALMIC LENS INCLUDING PROJECTION INSERTS COMPRISING SAME

(30) Priorité: 03.12.2002 FR 0215197
(43) Date de publication de la demande: 07.09.2005
(73) Titulaire: Essilor International, 94220 Charenton Le Pont (FR)
(72) Inventeur: CADO, Hervé, F-94500 Champigny-sur-Marne (FR); MOLITON, Renaud, F-75015 Paris (FR)
(74) Mandataire: Hirsch & Associés
(86) Numéro de dépôt international: PCT/FR2003/003555
(87) Numéro de publication internationale: WO 2004/053541

(56) Documents cités:
- US-A1- 2002 012 099
- US-A1- 2002 089 648

## Description

La présente invention concerne un séparateur de polarisation. L'invention concerne également un procédé de fabrication d'un tel séparateur de polarisation. Elle concerne aussi des lentilles ophtalmiques présentant des inserts de projection d'une image vers l'utilisateur comportant un tel séparateur de polarisation. L'invention concerne enfin des dispositifs de projection d'une image vers l'utilisateur comprenant de telles lentilles ophtalmiques.

Les séparateurs de polarisation sont des éléments optiques qui permettent de décomposer la lumière en ses composantes de polarisation différentes. La direction de polarisation de la lumière est définie par rapport au plan d'oscillation du champ électrique. Le plus souvent, la lumière non polarisée est décomposée en ses deux polarisations linéaires orthogonales. On distingue alors la polarisation S (perpendiculaire) et la polarisation P (parallèle). Dans la lumière polarisée S, le plan d'oscillation est perpendiculaire au plan d'incidence défini par la normale de la surface et le vecteur d'incidence. Dans la lumière de polarisation P, le plan d'oscillation est parallèle au plan d'incidence. La séparation des composantes peut être réalisée par absorption ou par réflexion.

De façon générale, les séparateurs de polarisation transmettent la polarisation P et réfléchissent la polarisation S. Il est généralement admis qu'un séparateur de polarisation idéal réfléchit la totalité de la lumière polarisée perpendiculairement au plan d'incidence (S) alors qu'il transmet la totalité de la lumière polarisée parallèlement au plan d'incidence (P) (pour une longueur d'onde donnée). L'efficacité de la fonction séparation de polarisation peut être exprimée comme le produit de la réflexion spectrale de la polarisation S (Rs) par la transmission spectrale de la polarisation P (Tp), à savoir (Rs)x(Tp) (à une longueur d'onde donnée). Il est aussi généralement admis que l'on recherche en général un séparateur de polarisation assurant une efficacité supérieure à 80 %, et de préférence supérieure à 90 %.

Les séparateurs de polarisation ont diverses applications, parmi lesquelles les lentilles ophtalmiques présentant des inserts de projection d'une image vers l'utilisateur.

On entend ici par lentilles ophtalmiques des systèmes de combinaison d'images pour lunettes ou masques; une image est projetée vers l'oeil du porteur par un chemin optique ménagé dans la lentille; on appelle alors "lentille" le système optique contenant les inserts, qui peut notamment être destiné à être monté dans une monture de lunettes ou dans un masque. Les inserts peuvent comprendre des miroirs, des lames semi-réfléchissantes, des cubes séparateurs de polarisation, des lames quart d'onde, des lentilles, des miroirs, des lentilles réfléchissantes concaves (un miroir de Mangin, par exemple) des lentilles diffractives et/ou des composants holographiques. Un dispositif de projection d'images vers l'utilisateur comprend alors la lentille montée dans des lunettes ou masques et une source d'images telle qu'un micro-écran, par exemple un micro-écran à cristaux liquides, plus particulièrement un micro-display Kobin CyberDisplay 320.

Dans de telles applications, les éléments séparateurs de polarisation servent au traitement de la lumière polarisée émise par les micro-écrans actuellement utilisés tels que les microdisplays.

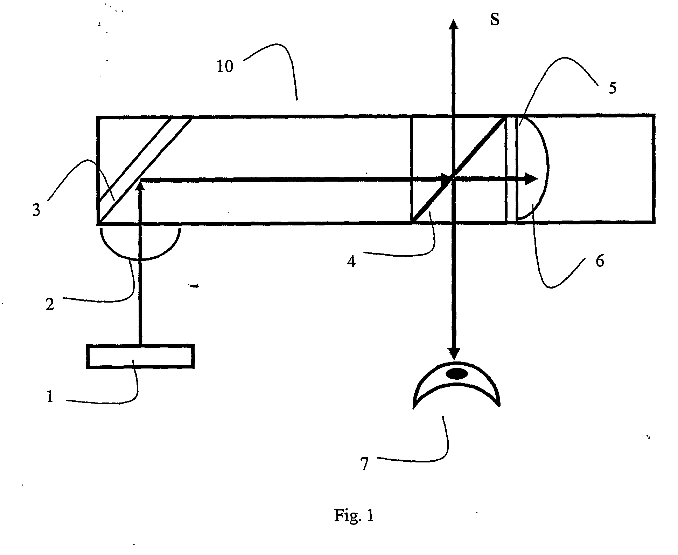

Un exemple d'une telle lentille ophtalmique est illustré à la figure 1. L'image est émise par une source 1. La source 1 peut être un micro-écran miniaturisé tel qu'un micro-display à cristaux liquides émettant une lumière polarisée (P). Le système optique de la lentille ophtalmique de projection 10 comprend une lentille de champ 2. Sur le trajet optique parcouru par l'image à l'intérieur de la lentille ophtalmique 10 est intercalé un miroir 3 et le séparateur de polarisation 4. Collé au séparateur de polarisation 4 est une lame quart d'onde 5 et un miroir de Mangin 6.

Le fonctionnement de la lentille ophtalmique 10 est le suivant. La lumière polarisée provenant de la source 1 passe tout d'abord par une lentille de champ 2. Après traversée de celle-ci, elle est réfléchie par un miroir 3 qui la renvoie à un angle de 90°. La lumière traverse ensuite le séparateur de polarisation 4, une des composantes de polarisation (S) étant réfléchie et l'autre (P) transmise. La composante transmise traverse une lame quart d'onde 5 dont les axes sont disposés à 45° de la direction de propagation P dans le plan perpendiculaire à la direction de propagation, puis frappe un miroir de Mangin 6, lequel réfléchit la lumière qui repasse à travers la lame quart d'onde. La lumière qui est maintenant polarisée S est réfléchie par le séparateur de polarisation vers l'oeil de l'observateur. Ce mode de réalisation permet alors de renvoyer la lumière polarisée émise par le micro-écran vers l'oeil 7.

Cependant, un tel dispositif incorporant un séparateur de polarisation « idéal » présente l'inconvénient de ne fournir vers l'oeil que 50 % de la lumière provenant d'un objet, en fonction ophtalmique, puisque 50 % de cette lumière étant polarisée S est réfléchie par le séparateur.

Dans ce qui suit, on utilisera les définitions suivantes.

Image see-through : On appelle image see-through l'image d'une scène vue par une traversée directe des rayons lumineux dans l'élément séparateur de polarisation.

Image écran : On appelle image écran, l'image d'une source lumineuse (dans notre exemple un micro-écran) traversant la lentille insérée dans le verre informatif comme indiqué à la figure 1.

Efficacité de la fonction séparation de polarisation : voir supra.

Efficacité de la fonction de vision see-through : C'est la valeur de l'intégrale mathématique du produit de la transmission en lumière non polarisée du séparateur de polarisation [=1/2*(Tp+Ts)] par le spectre d'émission de la source divisée par l'intégrale du spectre d'émission de la source. [dans le domaine spectral considéré].

Transmission de la fonction d'imagerie du verre informatif : c'est la valeur de l'intégrale mathématique du produit de la transmission spectrale de la fonction d'imagerie du verre informatif (définie par le chemin optique de la figure 1) par le spectre d'émission de la source divisée par l'intégrale du spectre d'émission de la source. [dans le domaine spectral considéré].

On notera que la transmission de la fonction d'imagerie du verre informatif ainsi que la transmission de la fonction de vision see-through peuvent également être pondérées par la sensibilité spectrale de l'oeil. On parlera alors de "transmission photopique de la fonction d'imagerie du verre informatif". On utilisera comme courbe de sensibilité spectrale de l'oeil la courbe normalisée Y de l'observateur 2° de la CIE.

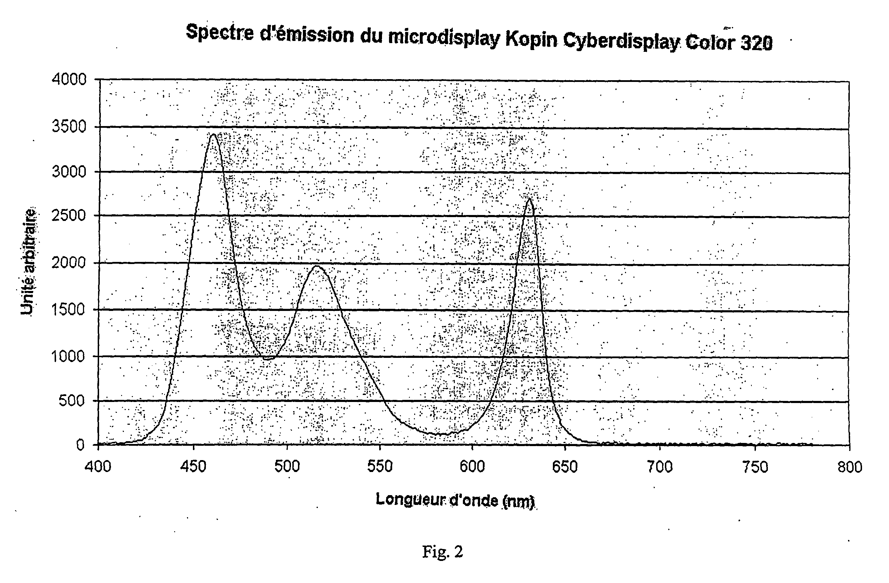

Centré localement : On dira qu'une courbe est centrée localement sur le spectre d'émission de la source de lumière lorsque :
- le spectre de la source d'émission se présente sous forme de pics (voir fig. 2 pour un exemple) ;
- autour d'un pic d'émission de la source de lumière, dans un domaine spectral restreint de l'ordre de grandeur du double de la largeur à mi-hauteur du pic d'émission de la source, la courbe se présente sous forme d'un pic (ou d'un creux) dont l'extremum local n'est pas éloigné spectralement du sommet du pic d'émission de la source de plus de la valeur de la largeur à mi-hauteur de ce pic.
- de façon alternative, on peut également utiliser le critère de Rayleigh pour considérer que deux courbes sont centrées localement.

L'invention propose alors un séparateur de polarisation qui permet une amélioration de la vision « see-through », en maintenant une transmission écran élevée. L'invention permet en outre de garder un équilibre des couleurs des deux images reçues par l'oeil.

L'invention est basée en particulier sur la découverte qu'il est suffisant pour le séparateur de polarisation de réfléchir la polarisation S autour des fréquences auxquelles le micro-display émet, à savoir typiquement 630, 520 et 460 nm, (correspondant aux couleurs rouge, vert et bleu, respectivement).

L'invention fournit donc un séparateur de polarisation présentant une réflexion pour la polarisation S centrée localement sur au moins un pic d'émission de la source d'émission de l'image d'un micro-écran.

On connaît en général les micro-écrans ou micro-displays, qui à ce jour font appel à la technologie LCD ; un exemple est le micro-display de Kopin. En outre, il est aisé de mesurer le spectre d'émission en énergie d'un tel micro-display et d'en déterminer au moins une longueur d'onde d'émission.

Selon un mode de réalisation, le séparateur présente une réflexion centrée localement sur au moins deux pics.

Selon un mode de réalisation, le séparateur présente une réflexion centrée localement sur au moins un pic dans le visible.

L'invention fournit aussi un séparateur de polarisation présentant une réflexion pour la polarisation S centrée localement sur au moins un pic correspondant à une longueur d'onde choisie parmi le rouge, le vert et le bleu.

On obtient une forme « en peigne » pour la transmission de la polarisation S (lorsque cette transmission est centrée sur deux longueurs d'onde au moins).

Selon un mode de réalisation, le séparateur présente une réflexion pour la polarisation S centrée sur le rouge, le vert et le bleu.

Selon un mode de réalisation, dans le séparateur, les pics de sa courbe de réflectance spectrale pour la polarisation S centrés localement autour des pics ont leur niveau maximum compris entre 60 et 100 %, de préférence entre 80 et 100 %.

Selon un mode de réalisation, dans le séparateur, sa courbe de réflectance spectrale pour la polarisation S présente, dans toutes les zones non-centrées localement autour des pics, un niveau compris entre 0 et 35 %, de préférence entre 0 et 20 %.

Selon un mode de réalisation, dans le séparateur, chaque pic de la courbe de réflectance spectrale de la polarisation S centré autour d'un des pics a une largeur à mi-hauteur comprise entre 5 et 100 nm, de préférence entre 20 et 80 nm.

Selon un mode de réalisation, dans le séparateur, chaque pic de la courbe résultant du produit de la transmittance spectrale pour la polarisation P et de la réflectance spectrale pour la polarisation S, centré autour d'un des pics a une largeur à mi-hauteur comprise entre 5 et 100 nm, de préférence entre 20 et 80 nm.

Selon un mode de réalisation, dans le séparateur, la transmittance spectrale pour la polarisation P est supérieure à 80 %, de préférence supérieure à 90 %, sur le spectre d'émission de la source, de préférence entre 400 et 700 nm.

Selon un mode de réalisation, dans le séparateur, la transmittance moyenne intégrée entre 400 et 700 nm est supérieure à 70 %.

Selon un mode de réalisation, le séparateur comprend un substrat pourvu d'un empilement de couches minces.

Selon un mode de réalisation, le séparateur comprend un substrat pourvu d'un élément holographique.

Selon un mode de réalisation, un des matériaux de l'empilement est du dioxyde de silicium.

Selon un mode de réalisation, un des matériaux de l'empilement est du dioxyde de zirconium ou du titanate de praséodymium.

Selon un mode de réalisation, le séparateur selon l'invention est sous forme de cube formé de deux prismes.

L'invention a encore pour objet une lentille ophtalmique présentant des inserts de projection d'une image vers l'utilisateur comprenant un séparateur de polarisation selon l'invention.

Selon un mode de réalisation, le séparateur de polarisation est réalisé sous forme de cube.

L'invention a encore pour objet un dispositif de projection d'une image vers l'utilisateur comprenant une lentille selon l'invention.

Selon un mode de réalisation, le dispositif de projection comprend en outre un micro-écran à cristaux liquides.

Selon un mode de réalisation, dans le dispositif de projection, le micro-écran à cristaux liquides émet une lumière polarisée P dans le rouge, le vert et le bleu.

L'invention sera décrite plus en détail à l'aide des figures en annexe, lesquelles montrent :
Fig. 1 une représentation schématique d'une lentille ophtalmique présentant des inserts de projection d'une image vers l'utilisateur ;
Fig. 2 une représentation du spectre de la source d'émission (micro-display Kopin Cyberdisplay Color 320) ;
Fig. 3 la courbe de réflectance spectrale pour la polarisation S pour un séparateur de polarisation selon l'invention ;
Fig. 4 la courbe de transmittance spectrale pour la polarisation P pour un séparateur de polarisation selon l'invention ;

Le séparateur selon l'invention comprend sur un substrat d'indice donné un empilement de couches minces. Il peut également être constitué d'un substrat pourvu d'un empilement ou élément holographique.

Par exemple, il peut s'agir d'un empilement ne comprenant que deux matériaux, l'un dit « haut indice » et l'autre dit « bas indice », de façon alternée.
C'est ce mode de réalisation qui a été choisi pour raison de simplicité de mise en oeuvre. Il est cependant aussi possible d'utiliser, par exemple, 20 matériaux différents dans un empilement comprenant 20 couches, avec des matériaux que l'on pourrait qualifier de « moyen indice ».

En tant que matériau de haut indice, on peut utiliser du ZrO₂ bien connu ou du PrTiO₃ (titanate de praséodymium). Dans ce dernier cas, le matériau est déposé sur le substrat en partant d'un composé non stoechiométrique [disponible chez Merck sous le nom de Substance H2] lequel est déposé par dépôt sous vide en présence d'oxygène. Le composé se trouve alors sous la forme oxydée et forme un film transparent qui correspond à la formule PrTiO₃.

L'indice du PrTiO₃ est de 2,0095 à 635 nm (longueur d'onde de référence). L'indice du ZrO₂ est de 1,9883.

Le deuxième matériau a donc un indice inférieur à celui-ci. Parmi ces matériaux, on peut citer notamment le SiO₂ et le MgF₂, le SiO₂, dont l'indice de réfraction est de 1,4786 à 635 nm s'étant révélé particulièrement adapté.

Le substrat peut être tout substrat transparent compatible avec les matériaux constituant l'empilement et notamment il peut s'agir de substrats minéraux ou organiques.

On entend par le terme « substrat minéral » un substrat en verre minéral, en contraste avec la notion de « substrat organique » formé d'un polymère.

Des matériaux appropriés comme substrats organiques sont par exemple les polymères de la classe des polythiouréthanes, obtenus à partir d'un polythiol et un polyisocyanate. De tels matériaux ainsi que leur procédé d'obtention sont décrits par exemple dans les brevets US 4,689,387 et US 4,775,733.

Des polythiols appropriés peuvent être par exemple le pentaerythrol tetrakis (thioglycolate), le pentaerythrol tetrakis(mercaptopropionate) ou encore le MDO [4-mercaptomethyl-3.6-dithia-1.8-octanedithiol]. Le polyisocyanate peut être notamment le xylylène diisocyanate.

Un substrat organique particulièrement approprié est obtenu par polymérisation de compositions à base de xylylène diisocyanate, de pentaerythritol tetrakis(mercaptoproprionate) et de MDO. Un tel produit est disponible chez Mitsui sous la dénomination MR8.

En tant que substrat minéral, on peut utiliser par exemple le matériau 1.6 de Coming, Code 60043, dont les constantes optiques sont sensiblement identiques à celles du MR8.

En tant que substrat minéral, on peut aussi utiliser par exemple du BK7, qui est disponible chez Schott Optical Glass.

Le séparateur selon l'invention est obtenu par dépôt de couches minces successives. En général, l'empilement comporte 5 à 20, en particulier 10 à 15 couches de matériaux.

Lors de la phase de dépôt, le substrat peut être maintenu de préférence à une température supérieure à l'ambiante, par exemple comprise entre 80 et 120°C. Avantageusement, le substrat est soumis à un nettoyage ionique préalablement à l'étape de dépôt, par exemple à l'argon.

Lors de l'étape de dépôt, la vitesse d'évaporation est en général de 1 à 10 nm/s ; de préférence 2 à 5 nm/s.

Les couches et leur épaisseur respective sont déterminées de façon classique par l'homme de l'art en fonction des longueurs d'onde autour desquelles la transmission doit être centrée. On utilisera à cet effet par exemple le logiciel classique « Essential Macleod », version 8.5, 2002, disponible chez Thin Film Center Inc., 2745 E. Via Rotonda, Tucson, AZ 85716. On renseigne le substrat (en indiquant son indice), la cible d'optimisation adaptée à la courbe d'émission spectrale de la source d'images, ainsi que la liste des matériaux ; le logiciel simule alors l'empilement.

Le séparateur de polarisation selon la présente invention est particulièrement adapté à des applications du type appareils de vision portables telles que les lentilles ophtalmiques présentant des inserts de projection d'une image vers l'utilisateur.

Un exemple d'une telle lentille est illustré à la figure 1 dont le mode de réalisation a déjà été décrit supra. Par rapport au mode de réalisation de l'art antérieur (dans lequel le séparateur recherché est le séparateur « idéal »), l'invention permet une meilleure vision « see-through », i.e. la vision ophtalmique d'un objet. En effet, dans la mesure où toute la lumière polarisée S n'est pas réfléchie par le séparateur, la transmission moyenne est augmentée. En ce qui concerne le micro-display, la lumière polarisée S renvoyée par le miroir après passage dans la lame quart d'onde n'étant qu'en partie réfléchie vers l'oeil de l'utilisateur, il se produit une baisse de la transmission de la lumière émise par le micro-display vers l'oeil de l'utilisateur. Cependant, cette baisse n'est pas sensible car le séparateur réfléchit la polarisation S autour des longueurs d'onde d'émission du micro-display.

Dans l'exemple d'un verre informatif tel que défini précédemment, l'efficacité de vision see-through passe de la valeur 50 % environ qui est obtenue avec un séparateur de polarisation classique à une valeur de 75 % environ lorsque l'on utilise le séparateur de polarisation selon l'invention. Dans le même temps, la transmission de la fonction imagerie ne diminue que vers une valeur égale à 40 % environ, ce qui est à comparer aux 50 % obtenus avec un séparateur de polarisation classique. Ceci s'entend toutes choses restant égales par ailleurs dans le système optique, en particulier en ce qui concerne des sources de pertes.

De préférence, la lentille ophtalmique est réalisée dans le même matériau que le substrat sur lequel a été déposé l'empilement de couches minces, donc par exemple du MR8 ou du BK7. Dans ce cas, le séparateur peut être constitué par un prisme. En effet, le fait d'utiliser pour le séparateur un substrat de même composition, donc de même indice de réfraction que le matériau constituant la lentille ophtalmique, permet de rendre le séparateur de polarisation moins visible pour le porteur, et de réduire ainsi la gêne occasionnée dans la fonction ophtalmique du verre.

Pour ce type d'applications, lorsque l'indice n₃ est sensiblement différent de l'indice de la lentille ophtalmique, le séparateur de polarisation est avantageusement réalisé sous forme de cube séparateur, composé de deux prismes, l'un d'entre eux portant sur une de ses faces un empilement tel que décrit ci-dessus. Il est également possible de concevoir le séparateur de polarisation sous la forme d'une lame immergée dans la lentille ophtalmique.

Les exemples suivants illustrent l'invention sans la limiter. Le logiciel de simulation utilisé est « Code V », version 9.0, sept. 2001, disponible chez Optical Research Associate, 3280 East Foothill Blvd, Pasadena, CA 91107. Les valeurs de transmission simulées sont calculées à partir de la formule de l'empilement des couches minces. On utilise par ailleurs un micro-display de Kopin dans tous les exemples (voir la fig. 2).

### EXEMPLE 1

Un palet biplan de BK7 d'indice 1.515 est nettoyé dans un bain à ultrasons (Gamme M10, standard pour les traitements anti-reflet).

Le palet ainsi préparé est ensuite introduit dans une installation de dépôt sous vide. Il est alors soumis à un nettoyage ionique à l'argon à une pression de 3·10⁻⁵ mbar sous 120 V de tension à l'anode et 1 A de courant d'ion pendant 2 minutes.

Puis on dépose une couche de PrTiO₃ d'une épaisseur indiquée dans le tableau 1, à une pression de 2,5·10⁻⁵ mbar dans les conditions suivantes :
vitesse d'évaporation : 3 nm/s ;
pression d'oxygène : 5·10⁻⁵ mbar ;
source d'évaporation : canon à électrons.

L'épaisseur de la couche déposée est suivie au moyen d'une balance à quartz et l'évaporation est arrêtée lorsque l'épaisseur indiquée au tableau 1 est atteinte.

Ensuite, on procède au dépôt d'une couche de SiO₂ d'une épaisseur indiquée dans le tableau 1 dans les mêmes conditions.

On dépose ainsi alternativement 14 couches au total. On découpe enfin le palet ainsi traité de façon à obtenir les séparateurs de polarisation ayant la forme désirée.

**Tableau 1**

| Couche | Matériau | Indice | Epaisseur [ nm] |
|---|---|---|---|
| 1 | SiO₂ | 1.4786 | 19.19 |
| 2 | PrTiO₃ | 2.0095 | 139.24 |
| 3 | SiO₂ | 1.4786 | 25.3 |
| 4 | PrTiO₃ | 2.0095 | 60.36 |
| 5 | SiO₂ | 1.4786 | 21.89 |
| 6 | PrTiO₃ | 2.0095 | 124.97 |
| 7 | SiO₂ | 1.4786 | 48.24 |
| 8 | PrTiO₃ | 2.0095 | 130.29 |
| 9 | SiO₂ | 1.4786 | 48.27 |
| 10 | PrTiO₃ | 2.0095 | 466.56 |
| 11 | SiO₂ | 1.4786 | 15.92 |
| 12 | PrTiO₃ | 2.0095 | 228.54 |
| 13 | SiO₂ | 1.4786 | 71.59 |
| 14 | PrTiO₃ | 2.0095 | 113.38 |

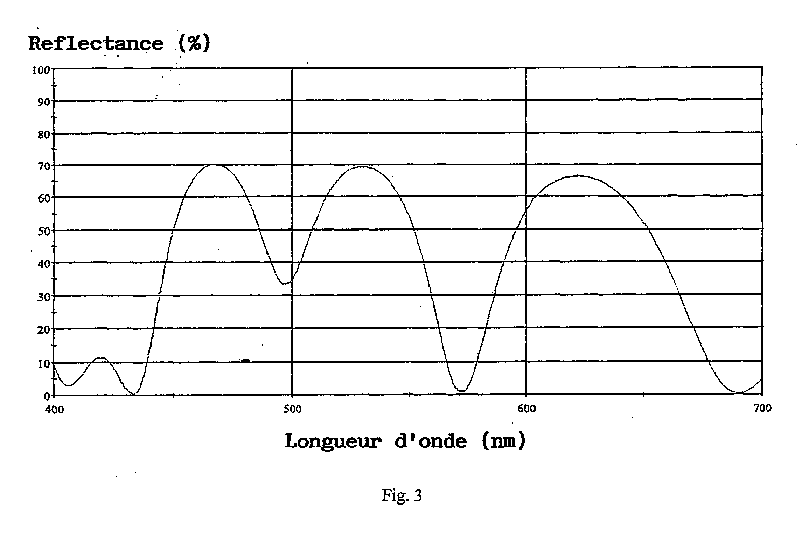

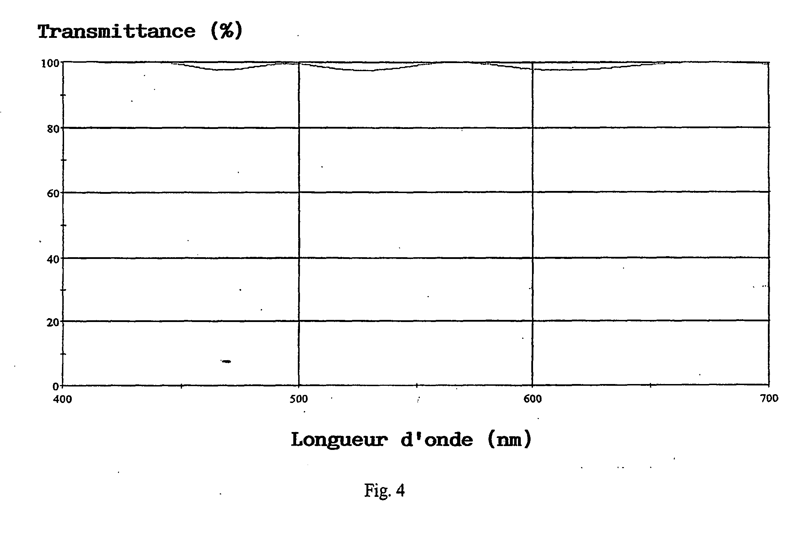

Les caractéristiques optiques d'un séparateur de polarisation ainsi obtenu sont indiquées aux figures 3 et 4 pour une incidence à 45°. Les figures 3 et 4 montrent les réflectance et transmittance spectrales du séparateur de polarisation vis-à-vis de la lumière de polarisation S et P, respectivement. On constate que la transmittance est en moyenne d'au moins 95 % pour la lumière de polarisation P alors que la lumière de polarisation S est réfléchie en fonction de la longueur d'onde, cette réflexion (ou transmission) étant centrée autour des longueurs d'onde rouge, vert et bleu (à 630, 520 et 460 nm respectivement). La transmission est comprise entre 25 et 30 % environ, les largeurs à mi-hauteur étant comprises entre environ 35 et 70 nm.

La transmission moyenne intégrée entre 400 et 700 nm vaut environ 75 %, ce qui représente un gain de 25 % pour la vision ophtalmique par rapport à un séparateur classique.

La transmission visuelle (pondération de la transmission par la réponse spectrale de l'oeil) est également d'environ 75 %.

La transmittance de la fonction imagerie a aussi été déterminée pour le centre et les bords du champ de vision afin de déterminer l'effet d'angle sur le traitement. La transmission a été calculée pour un utilisateur normé Y CIE (Commission Internationale de l'Eclairage) pour l'exemple d'un verre informatif selon la fig. 1. Les valeurs obtenues sont les suivantes (FOV : Field Of View, -4 à +4° et -5 à +5°, respectivement).

| Bleu Y vs | | | |
|---|---|---|---|
| FOV | | | |
| | -5 | 0 | 5 |
| 4 | 34.45 | | 35.34 |
| 0 | 34.49 | 35.98 | 35.33 |
| -4 | 34.45 | | 35.34 |

| Vert Y vs | | | |
|---|---|---|---|
| FOV | | | |
| | -5 | 0 | 5 |
| 4 | 31.29 | | 39.57 |
| 0 | 31.47 | 37.59 | 39.59 |
| -4 | 31.27 | | 39.57 |

| Rouge Y vs | | | |
|---|---|---|---|
| FOV | | | |
| | -5 | 0 | 5 |
| 4 | 39.04 | | 34.01 |
| 0 | 39.13 | 38.61 | 33.93 |
| -4 | 39.02 | | 34.01 |

On voit donc que les transmissions sont plutôt bien équilibrées entre les trois couleurs sur le champ de vision, ce qui signifie un bon maintien de la perception des couleurs sur l'ensemble de l'image.

On obtient une transmission visuelle du blanc du micro-display de 39 % au centre du champ (contre env. 54 % avec un séparateur « idéal ») ; le calcul de cette transmission tient compte des autres sources de pertes. Une telle valeur un peu abaissée n'entraîne pas de perception notable par l'oeil et n'occasionne pas de gêne.

La variation de la transmittance en fonction de l'angle d'incidence a aussi été déterminée. On trouve un comportement un peu asymétrique dans le rouge et le bleu, mais l'ensemble conserve une bonne stabilité du blanc dans tout le champ.

En outre, ont été analysées les coordonnées colorimétriques du blanc affiché par le micro-display et le décalage colorimétrique des coordonnées x,y,z de la CIE du blanc affiché par le dispositif par rapport au blanc affiché par le micro-display a été examiné. Ce décalage est ici exprimé comme étant la distance au blanc du micro-display dans l'espace x,y :
Distance par rapport au Blanc
micro-display (espace x,y)
D² = (x-x_{blanc})² + (y-y_{blanc})²

| | | |
|---|---|---|
| 0.025826253 | | 0.0175353 |
| 0.025264825 | 0.012468111 | 0.019038742 |
| 0.025812775 | | 0.0175353 |

On se rend ainsi compte que le séparateur selon l'invention a très peu d'influence sur la perception des couleurs dans la voie d'imagerie. Il modifie très peu les couleurs du micro-display.

Par ailleurs, on a calculé la transmission see-through pour divers angles d'incidence sur le séparateur. Les valeurs sont de 74.57 %, 76.60 % et 76.28 % pour des valeurs d'angle de 40°, 45° et 50°, respectivement. La transmission est donc homogène.

Une étude colorimétrique a aussi été mise en oeuvre pour déterminer l'influence du séparateur selon l'invention en mode « see-through ». On peut alors utiliser comme source de lumière blanche le micro-display en vision « see-through » et observer la modification de la perception de cette lumière blanche. Les résultats sont exprimés en coordonnées x,y,z CIE. L'angle d'incidence est de 40°, 45° et 50°. Les résultats sont regroupés ci-dessous.

| 40° | x | y | z |
|---|---|---|---|
| Echantillon | 0.32528584 | 0.3162037 | 0.35851046 |
| Microdisplay | 0.31273021 | 0.32903828 | 0.35823151 |
| Delta | 0.01255563 | -0.01283458 | 0.00027896 |

| 45° | x | y | z |
|---|---|---|---|
| Echantillon | 0.31966024 | 0.33805613 | 0.34228364 |
| Microdisplay | 0.31273021 | 0.32903828 | 0.35823151 |
| Delta | 0.00693002 | 0.00901785 | -0.01594787 |

| 50° | x | y | z |
|---|---|---|---|
| Echantillon | 0.31092033 | 0.34921327 | 0.33986641 |
| Microdisplay | 0.31273021 | 0.32903828 | 0.35823151 |
| Delta | -0.00180989 | 0.02017499 | -0.0183651 |

Cette même étude a été mise en oeuvre pour chaque couleur rouge, vert et bleu, et conforte les résultats obtenus précédemment.

### EXEMPLE 2

On procède comme dans l'exemple 1, mais sur un support MR8 (en fait un support inorganique correspondant au MR8), d'indice 1.5931.

Les valeurs sont indiquées dans le tableau 2.

**Tableau 2**

| Couche | Matériau | Epaisseur [ nm] |
|---|---|---|
| 1 | PrTiO₃ | 153.03 |
| 2 | SiO₂ | 240.94 |
| 3 | PrTiO₃ | 79.04 |
| 4 | SiO₂ | 50.45 |
| 5 | PrTiO₃ | 141.05 |
| 6 | SiO₂ | 38.16 |
| 7 | PrTiO₃ | 236.4 |
| 8 | SiO₂ | 21.19 |
| 9 | PrTiO₃ | 490.84 |
| 10 | SiO₂ | 51.32 |
| 11 | PrTiO₃ | 116.76 |

Les caractéristiques optiques d'un séparateur de polarisation ainsi obtenu sont sensiblement identiques à celles indiquées à la figure 3 précédente pour une incidence à 45°.

Les autres conclusions de l'exemple 1 s'appliquent ici *mutatis mutandis*.

### EXEMPLE 3

On procède comme dans l'exemple 1, mais en remplaçant le PrTiO₃ par du ZrO₂ (les conditions de dépôt sont celles classiques).

Les résultats sont inchangés.

### EXEMPLE 4

On procède comme dans l'exemple 2, mais en remplaçant le PrTiO₃ par du ZrO₂ (les conditions de dépôt sont celles classiques).

Les résultats sont inchangés.

En dehors des applications décrites ci-dessus, le séparateur de polarisation peut être utile dans tous les domaines de fourniture et de traitement de la lumière polarisée. Par ailleurs, il est possible d'utiliser le séparateur de polarisation selon l'invention afin de séparer la lumière en ses composantes de polarisation circulaire ou elliptique.

## Revendications

1. Dispositif de projection d'une image vers l'utilisateur, permettant la vision see-through, comprenant un micro-écran à cristaux liquides (1) comme source d'émission d'image et une lentille ophtalmique (10) présentant des inserts de projection d'une image vers l'utilisateur, lesdits inserts comprenant un séparateur de polarisation (4) présentant une réflexion pour la polarisation S centrée localement sur au moins un pic correspondant à une longueur d'onde d'émission choisie parmi le rouge, le vert, le bleu et un pic d'émission de la source d'émission de l'image du micro-écran (1),
une réflexion centrée localement signifiant qu'autour d'un pic d'émission de l'image du micro-écran, dans un domaine spectral restreint de l'ordre de grandeur du double de la largeur à mi-hauteur du pic d'émission de l'image du micro-écran, la courbe de réflectance spectrale se présente sous forme d'un pic dont l'extremum local n'est pas éloigné spectralement du sommet du pic d'émission de l'image du micro-écran de plus de la valeur de la largeur à mi-hauteur de ce pic.

2. Dispositif selon la revendication 1, dans lequel le micro-écran à cristaux liquides émet une lumière polarisée P dans le rouge, le vert et le bleu.

3. Dispositif selon l'une des revendications 1 ou 2, dans lequel le séparateur de polarisation présente une réflexion centrée localement sur au moins deux pics.

4. Dispositif selon la revendication 1, 2 ou 3, dans lequel le séparateur de polarisation présente une réflexion centrée localement sur au moins un pic dans le visible.

5. Dispositif selon l'une des revendications 1 à 4, dans lequel le séparateur de polarisation présente une réflexion centrée localement sur au moins deux pics dans le visible.

6. Dispositif selon l'une des revendications 1 à 5, dans lequel le séparateur de polarisation présente une réflexion pour la polarisation S centrée sur le rouge, le vert et le bleu.

7. Dispositif selon l'une des revendications 1 à 6, dans lequel les pics de la courbe de réflectance spectrale pour la polarisation S, centrés localement autour des pics, ont leur niveau maximum compris entre 60 et 100%, de préférence entre 80 et 100 %.

8. Dispositif selon l'une des revendications 1 à 7, dans lequel la courbe de réflectance spectrale pour la polarisation S présente, dans toutes les zones non-centrées localement autour des pics, un niveau compris entre 0 et 35 %, de préférence entre 0 et 20 %.

9. Dispositif selon l'une des revendications 1 à 8, dans lequel chaque pic de la courbe de réflectance spectrale de la polarisation S centrée autour d'un des pics, a une largeur à mi-hauteur comprise entre 5 et 100 nm, de préférence entre 20 et 80 nm.

10. Dispositif selon l'une des revendications 1 à 9, dans lequel chaque pic de la courbe résultant du produit de la transmittance spectrale pour la polarisation P et de la réflectance spectrale pour la polarisation S, centré autour d'un des pics, a une largeur à mi-hauteur comprise entre 5 et 100 nm, de préférence entre 20 et 80 nm.

11. Dispositif selon l'une des revendications 1 à 10, dans lequel la transmittance spectrale pour la polarisation P est supérieure à 80 %, de préférence supérieure à 90 %, sur le spectre d'émission de la source, de préférence entre 400 et 700 nm.

12. Dispositif selon l'une des revendications 1 à 11, dans lequel la transmittance moyenne intégrée entre 400 et 700 nm est supérieure à 70 %.

13. Dispositif selon l'une des revendications 1 à 12, dans lequel le séparateur de polarisation comprend un substrat pourvu d'un empilement de couches minces.

14. Dispositif selon l'une des revendications 1 à 12, dans lequel le séparateur de polarisation comprend un substrat pourvu d'un élément holographique.

15. Dispositif selon l'une des revendications 1 à 13, dans lequel un des matériaux est du dioxyde de silicium.

16. Dispositif selon l'une des revendications 1 à 13, dans lequel un des matériaux est du dioxyde de zirconium ou du titanate de praséodyme.

17. Dispositif selon l'une des revendications 1 à 16, dans lequel le séparateur de polarisation (4) est réalisé sous forme de cube.

18. Dispositif selon la revendication 17, dans lequel le cube est formé de deux prismes.

## Claims

1. A device for projecting an image towards the user, allowing see-through vision, comprising a liquid crystal micro-display (1) as an image-emitting source and an ophthalmic lens (10) with inserts for projecting an image towards the user, said inserts having a polarization splitter (4) in which reflection of the S polarization is locally centered on at least one peak corresponding to an emission wavelength selected from the red, the green, the blue and an emission peak of the emission source of a micro-display image (1),
reflection which is locally centered meaning that around one emission peak of the micro-display image, within a restricted spectral domain with an order of magnitude that is twice the mid-height width of the emission peak of the micro-display image, the spectral reflectance curve follows a peak, the local extremum of which is not spectrally distant from the apex of the emission peak of the micro-display image by greater than the value of the mid-height width of this peak.

2. The device according to claim 1, in which the liquid crystal micro-display emits a P polarized light in red, green and blue.

3. The device according to one of claims 1 or 2, in which the polarisation splitter has a reflection which is locally centered on at least two peaks.

4. The device according to one of claims 1, 2 or 3, in which the polarisation splitter has a reflection which is locally centered on at least one peak in the visible spectrum.

5. The device according to one of claims 1 to 4, in which the polarisation splitter has a reflection which is locally centered on at least two peaks in the visible spectrum.

6. The device according to one of claims 1 to 5, in which the polarisation splitter has a reflection which is, for the S polarization, centered on red, green and blue.

7. The device according to one of claims 1 to 6, in which peaks of the spectral reflectance curve for the S polarization, locally centered around the peaks, have their maximum level comprised between 60 and 100%, preferably comprised between 80 and 100%.

8. The device according to one of claims I to 7, in which the spectral reflectance curve for the S polarization has a level comprised between 0 and 35% preferably comprised between 0 and 20%, in all zones not locally centered around the peaks.

9. The device according to one of claims 1 to 8, in which each peak of the spectral reflectance curve of the S polarization centered around one of the peaks has a mid-height width of between 5 and 100 nm preferably between 20 and 80 nm.

10. The device according to one of claims 1 to 9, in which each peak of the curve resulting from the product of the spectral transmittance for the P polarization and the spectral reflectance for the S polarization, centered around one of the peaks, has a mid-height width of between 5 and 10 nm, preferably between 20 and 80 nm.

11. The device according to one of claims 1 to 10, in which spectral transmittance for the P polarization is greater than 80%, preferably greater than 90% on the emission spectrum of the source, preferably between 400 and 700 nm.

12. The device according to one of claims 1 to 11, in which the integrated average transmittance between 400 and 700 nm is greater than 70%.

13. The device according to one of claims 1 to 12, in which the polarization splitter comprises a substrate with a stack of thin layers.

14. The device according to one of claims 1 to 12, in which the polarization splitter comprises a substrate with a holographic element.

15. The device according to one of claims 1 to 13, in which one of the materials is silicon dioxide.

16. The device according to one of claims 1 to 13, in which one of the materials is zirconium dioxide or praseodymium titanate.

17. The device according to one of claims 1 to 16, in which the polarization splitter (4) is in the form of a cube.

18. The device according to claim 17, in which the cube is made up of two prisms.

## Patentansprüche

1. Vorrichtung zur Projektion eines Bildes zum Benutzer zum Klarsichtsehen, umfassend einen Mikroflüssigkristallbildschirm (1) als Bildsendequelle und eine ophtalmische Linse (10), die Einsätze zur Projektion eines Bildes zum Benutzer aufweist, wobei die Einsätze einen Polarisationsteiler (4) umfassen, der eine Reflexion für die Polarisation S aufweist, die lokal auf mindestens einem Peak entsprechend einer Sendewellenlänge, die unter dem Rot, Grün, Blau ausgewählt wird, und einem Sendepeak der Sendequelle des Bildes des Mikrobildschirms (1) zentriert ist,
wobei eine lokal zentrierte Reflexion bedeutet, dass um ein Sendepeak des Bildes des Mikrobildschirms in einem eingeschränkten Spektralbereich von der Größenordnung des Doppelten der Breite auf halber Höhe des Sendepeaks des Bildes des Mikrobildschirms die Kurve des Spektralreflexionsvermögens in Form eines Peaks vorhanden ist, deren lokales Extrem spektral von der Spitze des Sendepeaks des Bildes des Mikrobildschirms nicht weiter als um den Wert der Breite auf halber Höhe dieses Peaks entfernt ist.

2. Vorrichtung nach Anspruch 1, bei der der Flüssigkristallmikrobildschirm ein polarisiertes Licht P im Rot, Grün und Blau entsendet.

3. Vorrichtung nach einem der Ansprüche 1 oder 2, bei der der Polarisationsteiler eine lokal auf mindestens zwei Peaks zentrierte Reflexion aufweist.

4. Vorrichtung nach Anspruch 1, 2 oder 3, bei der der Polarisationsteiler eine lokal auf mindestens ein Peak im sichtbaren Bereich zentrierte Reflexion aufweist.

5. Vorrichtung nach einem der Ansprüche 1 bis 4, bei der der Polarisationsteiler eine lokal auf mindestens zwei Peaks im sichtbaren Bereich zentrierte Reflexion aufweist.

6. Vorrichtung nach einem der Ansprüche 1 bis 5, bei der der Polarisationsteiler eine Reflexion für die Polarisation S aufweist, die auf dem Rot, Grün und Blau zentriert ist.

7. Vorrichtung nach einem der Ansprüche 1 bis 6, bei der die Peaks der Kurve des spektralen Reflexionsvermögens für die Polarisation S, die lokal um Peaks zentriert sind, ein Maximalniveau zwischen 60 und 100 %, vorzugsweise zwischen 80 und 100 % aufweisen.

8. Vorrichtung nach einem der Ansprüche 1 bis 7, bei der die Kurve des spektralen Reflexionsvermögens für die Polarisation S in allen nicht lokal um Peaks zentrierten Zonen ein Niveau zwischen 0 und 35 %, vorzugsweise zwischen 0 und 20 % aufweist.

9. Vorrichtung nach einem der Ansprüche 1 bis 8, bei der jedes Peak der Kurve des spektralen Reflexionsvermögens für die Polarisation S, die um eines der Peaks zentriert ist, eine Breite auf halber Höhe zwischen 5 und 100 nm, vorzugsweise zwischen 20 und 80 nm aufweist.

10. Vorrichtung nach einem der Ansprüche 1 bis 9, bei der jedes Peak der Kurve, die sich aus dem Produkt des spektralen Transmissionsfaktors für die Polarisation P und dem spektralen Reflexionsvermögen für die Polarisation S ergibt, das um eines der Peaks zentriert ist, eine Breite auf halber Höhe zwischen 5 und 100 nm, vorzugsweise zwischen 20 und 80 nm aufweist.

11. Vorrichtung nach einem der Ansprüche 1 bis 10, bei der der spektrale Transmissionsfaktor für die Polarisation P größer als 80 %, vorzugsweise größer als 90 %, auf dem Sendespektrum der Quelle, vorzugsweise zwischen 400 und 700 nm, ist.

12. Vorrichtung nach einem der Ansprüche 1 bis 11, bei der der durchschnittliche zwischen 400 und 700 nm integrierte Transmissionsfaktor größer als 70 % ist.

13. Vorrichtung nach einem der Ansprüche 1 bis 12, bei der der Polarisationsteiler ein Substrat umfasst, das mit einer Stapelung dünner Schichten versehen ist.

14. Vorrichtung nach einem der Ansprüche 1 bis 12, bei der der Polarisationsteiler ein Substrat umfasst, das mit einem holographischen Element versehen ist.

15. Vorrichtung nach einem der Ansprüche 1 bis 13, bei der eines der Materialien Siliziumdioxid ist.

16. Vorrichtung nach einem der Ansprüche 1 bis 13, bei der eines der Materialien Zirkoniumdioxid oder Praseodymtitan ist.

17. Vorrichtung nach einem der Ansprüche 1 bis 16, bei der der Polarisationsteiler (4) in Form eines Kubus ausgeführt ist.

18. Vorrichtung nach Anspruch 17, bei der der Kubus von zwei Prismen gebildet ist.
